# FASCICULE DE BREVET EUROPEEN

(11) **EP 0 871 598 B1**
(45) Date de publication et mention de la délivrance du brevet: **30.05.2001**
(21) Numéro de dépôt: 96943192.3
(22) Date de dépôt: 24.12.1996
(51) Int. Cl.: C04B 18/10, C04B 28/08, B09B 3/00, E02D 3/12

(54) **PROCEDE DE VALORISATION DE RESIDUS D'INCINERATION DE DECHETS MENAGERS ET DE CENDRES RESULTANT DE L'INCINERATION DE BOUES DE STATIONS D'EPURATION D'EAUX URBAINES ET MELANGE OBTENU PAR CE PROCEDE**
VERFAHREN ZUR VERWERTUNG VON HAUSMÜLLVERBRENNUNGSRÜCKSTÄNDEN UND VON ABWASSERKLÄRANLAGENSCHLAMMVERBRENNUNGSASCHEN UND DREN GEMISCHEN
METHOD FOR RECYCLING HOUSEHOLD WASTE INCINERATION RESIDUES AND ASHES FROM INCINERATION OF SLUDGE FROM URBAN SEWAGE TREATMENT PLANTS, AND MIXTURE OBTAINED BY THIS METHOD

(30) Priorité: 05.01.1996 FR 9600082
(43) Date de publication de la demande: 21.10.1998
(73) Titulaire: COMPAGNIE DU SOL, 92000 Nanterre (FR)
(72) Inventeur: BOUCHELAGHEM, Abdelkrim, F-75010 Paris (FR); COJAN, Jean-Yves, F-94160 Saint-Mandé (FR)
(74) Mandataire: Dronne, Guy
(86) Numéro de dépôt international: FR9602076
(87) Numéro de publication internationale: WO9725289

(56) Documents cités:
- EP-A- 0 547 923
- DATABASE WPI Section Ch, Week 8705 Derwent Publications Ltd., London, GB; Class C03, AN 87-032275 XP002013419 & JP 61 287 980 A (YG MITSURU SANGYO) , 18 Décembre 1986
- CHEMICAL ABSTRACTS, vol. 100, no. 26, 25 Juin 1984 Columbus, Ohio, US; abstract no. 214699, "Solidifying materials" XP002013417 & JP 59 013 658 A (NIHON CEMENT CO.) 24 Janvier 1984
- CHEMICAL ABSTRACTS, vol. 87, no. 18, 31 Octobre 1977 Columbus, Ohio, US; abstract no. 140197, KAWASHIMA CHIKARA & AL.: "Effective use of incinerated ash of sewage sludge for soil cement" XP002013418 & SEMENTO GIJUTSI NEMPO, no. 30, 1976, pages 101-104,

## Description

La présente invention concerne un procédé de valorisation de résidus d'incinération de déchets ménagers et de cendres résultant de l'incinération de boues de stations d'épuration d'eaux urbaines et un mélange obtenu par ce procédé.

Les résidus d'incinération de déchets ménagers, ou mâchefers, sont généralement éliminés en décharges.

Or, ce mode d'élimination ne présente aucun avantage car non seulement il est lui-même relativement coûteux, mais en outre, il ne procure aucune contrepartie financière.

De plus, indépendamment de ces considérations économiques, le volume croissant des déchets ménagers rend cette solution inappropriée à plus ou moins long terme.

On a donc cherché à valoriser les résidus de l'incinération de déchets ménagers en les utilisant comme matériaux, notamment en travaux publics, afin d'économiser le coût de leur élimination traditionnelle ainsi que le prix d'achat du matériau qu'ils remplacent.

C'est ainsi que les résidus dits à faible fraction lixiviable peuvent être utilisés, après déferraillage et criblage, comme remblais de fondations pour des routes, à condition que ces remblais ne se trouvent pas au contact d'une masse d'eau qui pourrait lessiver le remblai et entraîner les matières polluantes présentes dans les résidus au-delà de la zone de remblai.

Bien que cette solution donne satisfaction, il est clair qu'elle est limitée à des conditions d'usage restrictives et qu'elle ne concerne que les résidus à faible fraction lixiviable.

Par ailleurs, le problème se pose également de l'élimination des boues de stations d'épuration d'eaux urbaines.

Une solution connue consiste à les incinérer, ce qui réduit leur volume et peut même permettre, pour les cendres présentant un potentiel polluant peu élevé, de les valoriser en épandage agricole.

Cependant, l'incinération des boues produit également des cendres qui ne sont pas utilisables en épandage agricole et doivent être éliminées en décharges, comme les résidus d'incinération de déchets ménagers.

La présente invention vise à fournir un procédé de stabilisation à la fois des résidus d'incinération de déchets ménagers et des cendres résultant de l'incinération de boues de stations d'épuration d'eaux urbaines, et ce quelle que soit la classification des résidus et des cendres, qui peuvent présenter une forte fraction lixiviable et respectivement un potentiel polluant élevé, sous réserve que la règlementation autorise une telle valorisation.

Ce procédé, qui est simple et économique à mettre en oeuvre, permet d'obtenir un mortier utilisable en travaux publics et dont le potentiel polluant est très inférieur aux limites fixées par la règlementation en vigueur.

Le procédé selon l'invention se caractérise par le fait que l'on mélange des résidus de l'incinération de déchets ménagers avec
- 5 % à 50 % en poids, par rapport auxdits résidus, de cendres résultant de l'incinération des boues de stations d'épuration d'eaux urbaines,
- 1 % à 20 % en poids, par rapport auxdits résidus, de poudre de laitier,
- 0,3 % à 7 % en poids, par rapport auxdits résidus, de chaux magnésienne, et
- une quantité d'eau suffisante pour effectuer le gâchage du mélange et lui conférer une consistance souhaitée.

Selon l'invention, on ajuste la quantité de cendres dans le mélange, qui est comprise entre 5 et 50 % en poids par rapport aux résidus, en fonction de la granulométrie des résidus et de la granulométrie que l'on souhaite obtenir pour le mortier, selon l'utilisation qui en est faite.

La présente invention a également pour objet le mélange obtenu par mise en oeuvre du procédé décrit ci-dessus, ainsi que l'utilisation de ce mélange comme mortier.

Ce mortier présente notamment l'avantage d'être d'une fluidité variable en fonction de la quantité d'eau qu'il contient, et qui correspond à la somme des teneurs initiales en eau des cendres et des résidus et de la quantité d'eau ajoutée au mélange.

Ainsi, on peut rendre le mortier suffisamment fluide pour être pompable, ce qui est utile notamment pour remplir des vides souterrains.

Le mortier selon l'invention, outre qu'il permet de stabiliser et de valoriser efficacement les cendres et les résidus, présente des caractéristiques mécaniques particulièrement élevées qui autorisent son utilisation dans de nombreux domaines.

En particulier, on peut l'utiliser pour remplir des cavités souterraines comme indiqué plus haut, mais également pour réaliser des éléments de construction tels que des panneaux préfabriqués ou des parpaings.

Une autre utilisation envisageable est l'inertage de déchets très polluants pour leur stockage en décharge traditionnelle.

Selon l'invention, on entend par poudre de laitier, du laitier de haut-fourneau broyé, du ciment de laitier de haut fourneau ou tout autre produit contenant du laitier de haut fourneau.

Avantageusement, la chaux magnésienne se compose essentiellement d'environ 66 % en poids d'oxyde de calcium (Ca0) et d'environ 33 % en poids d'oxyde de magnésium (Mg0).

Dans le but de mieux faire comprendre l'invention, on va en décrire maintenant des exemples donnés à titre non limitatif de la portée de l'invention.

### Exemple 1

On souhaite stabiliser et valoriser des résidus d'incinération de déchets ménagers et des cendres résultant de l'incinération de boues de stations d'épuration d'eaux urbaines présentant les teneurs en polluants suivantes, déterminées par le test de lixiviation de la norme NF X31-210.

| | Résidus | Cendres |
|---|---|---|
| Teneur en eau (%) | 17 | 35 |
| Fraction soluble (%) | 5.3 | 4.49 |
| Hg (mg/kg) | <0.07 | <0.015 |
| Pb (mg/kg) | 12.3 | <0.15 |
| Cd (mg/kg) | <0.8 | <0.3 |
| As (mg/kg) | <0.2 | <0.15 |
| Cr6 (mg/kg) | 1.8 | <0.015 |
| SO4 (mg/kg) | 2300 | 14050 |
| COT (mg/kg) | 1250 | <20 |

Sachant que la législation en vigueur exige, pour autoriser la valorisation de déchets, que ce test fournisse au maximum les valeurs suivantes,

| | Seuils admis |
|---|---|
| Fraction soluble (%) | 5 |
| Hg (mg/kg) | 0.2 |
| Pb (mg/kg) | 10 |
| Cd (mg/kg) | 1 |
| As (mg/kg) | 2 |
| Cr6 (mg/kg) | 1.5 |
| SO4 (mg/kg) | 10000 |
| COT (mg/kg) | 1500 |

il est naturellement exclu de valoriser ces déchets en l'état. On réalise alors un mortier ayant la composition suivante :

| | |
|---|---|
| résidus | 1000 kg |
| cendres | 250 kg |
| ciment de laitier contenant 80% de laitier de haut fourneau | 52 kg |
| chaux magnésienne | 17 kg |
| eau | 135 kg |

Ce mortier est suffisamment fluide pour être pompable.

La résistance à la compression à 28 jours du mortier ainsi obtenu est de 3,91 MPa.

Un test de lixiviation sur ce mortier, effectué selon la norme NF X31-210, donne les résultats suivants, qui sont inférieurs aux valeurs minimales requises.

| | |
|---|---|
| Fraction soluble | 0.33 |
| Hg (mg/kg) | <0.07 |
| Pb (mg/kg) | <1.9 |
| Cd (mg/kg) | <0.4 |
| As (mg/kg) | <0.2 |
| Cr6 (mg/kg) | <0.4 |
| SO4 (mg/kg) | 185 |
| COT (mg/kg) | 112 |

Ce mortier peut donc être valorisé.

### Exemple 2

Pour stabiliser les mêmes résidus et cendres qu'à l'exemple 1, on réalise un mortier ayant la composition suivante :

| | |
|---|---|
| résidus | 1000 kg |
| cendres | 250 kg |
| ciment de laitier contenant 80% de laitier de haut fourneau | 38 kg |
| chaux magnésienne | 12 kg |
| eau | 125 kg |

Le mortier ainsi obtenu est pompable et présente une résistance à la compression à 28 jours de 2,1 MPa.

Un test de lixiviation selon la norme NF X31-210 donne les résultats suivants :

| | |
|---|---|
| Fraction soluble (%) | 0.52 |
| Hg (mg/kg) | <0.07 |
| Pb (mg/kg) | <1.9 |
| Cd (mg/kg) | <0.4 |
| As (mg/kg) | <0.2 |
| Cr6 (mg/kg) | <0.4 |
| SO4 (mg/kg) | 261 |
| COT (mg/kg) | 167 |

Ce mortier, comme celui de l'exemple 1, peut donc être valorisé par exemple en travaux publics.

### Exemple 3

Pour stabiliser et valoriser les mêmes résidus et cendres qu'à l'exemple 1, on réalise le mortier suivant:

| | |
|---|---|
| résidus | 1000 kg |
| cendres | 250 kg |
| ciment de laitier contenant 80% de laitier de haut fourneau | 24 kg |
| chaux magnésienne | 8 kg |
| eau | 118 kg |

Le mortier obtenu est pompable et présente une résistance à la compression à 28 jours de 1,3 MPa.

On effectue un test de lixiviation sur ce mortier selon la norme NF X31-210 et l'on obtient les résultats suivants :

| | |
|---|---|
| FS (%) | 0.64 |
| Hg (mg/kg) | <0.07 |
| Pb (mg/kg) | <1.9 |
| Cd (mg/kg) | <0.4 |
| As (mg/kg) | <0.2 |
| Cr6 (mg/kg) | <0.4 |
| SO4 (mg/kg) | 337 |
| COT (mg/kg) | 195 |

Ce mortier est donc valorisable.

### Exemple 4

Pour stabiliser et valoriser les mêmes cendres et résidus qu'à l'exemple 1, on réalise le mortier suivant :

| | |
|---|---|
| résidus | 1000 kg |
| cendres | 50 kg |
| laitier | 84 kg |
| chaux magnésienne | 28 kg |
| eau | 207 kg |

La résistance à la compression à 28 jours du mortier obtenu est de 4,2 MPa.

Un test de lixiviation sur ce mortier, selon la norme NF X31-210 donne les résultats suivants :

| | |
|---|---|
| FS (%) | 0.38 |
| Hg (mg/kg) | <0.07 |
| Pb (mg/kg) | <1.9 |
| Cd (mg/kg) | <0.4 |
| As (mg/kg) | <0.2 |
| Cr6 (mg/kg) | <0.4 |
| SO4 (mg/kg) | 203 |
| COT (mg/kg) | 121 |

ce qui confirme que le mortier est valorisable, par exemple en travaux publics.

### Exemple 5

Pour stabiliser et valoriser les mêmes cendres et résidus qu'à l'exemple 1, on réalise le mortier suivant :

| | |
|---|---|
| résidus | 1000 kg |
| cendres | 500 kg |
| laitier | 30 kg |
| chaux magnésienne | 10 kg |
| eau | 58 kg |

La résistance à la compression à 28 jours du mortier est de 1,6 MPa.

Un test de lixiviation selon la norme NF X31-210 donne les résultats suivants :

| | |
|---|---|
| FS (%) | 0.82 |
| Hg (mg/kg) | <0.07 |
| Pb (mg/kg) | <1.9 |
| Cd (mg/kg) | <0.4 |
| As (mg/kg) | <0.2 |
| Cr6 (mg/kg) | <0.4 |
| SO4 (mg/kg) | 743 |
| COT (mg/kg) | 172 |

Le mortier est donc utilisable, par exemple, pour remplir des vides souterrains par injection.

Il est bien entendu que les exemples ci-dessus ne présentent aucun caractère limitatif et qu'ils pourront recevoir toute modification désirable sans sortir du cadre de l'invention.

## Revendications

1. Procédé de stabilisation de résidus d'incinération de déchets ménagers et de cendres résultant de l'incinération de boues de stations d'épuration d'eaux urbaines, caractérisé par le fait que l'on mélange les résidus de l'incinération de déchets ménagers avec :
- 5 % à 50 % en poids, par rapport auxdits résidus, de cendres résultant de l'incinération des boues de stations d'épuration d'eaux urbaines,
- 1 % à 20 % en poids, par rapport auxdits résidus, de poudre de laitier,
- 0,3 % à 7 % en poids, par rapport auxdits résidus, de chaux magnésienne, et
- une quantité d'eau suffisante pour effectuer la gâchage du mélange et lui conférer une consistance souhaitée.

2. Mélange obtenu par mise en oeuvre du procédé selon la revendication 1.

3. Utilisation du mélange selon la revendication 2 comme mortier, notamment pour l'injection de vides souterrains.

## Claims

1. Method for stabilizing household waste incineration residues and ashes from the incineration of sludge of urban sewage treatment plants, characterized in that the residues of household waste incineration are mixed with:
- 5% to 50% by weight, with respect to said residues, of ashes resulting from incineration of the sludge from urban sewage treatment plants,
- 1% to 20 % by weight, with respect to said residues, of slag powder,
- 0.3% to 7% by weight, with respect to said residues, of magnesian lime, and
- a sufficient quantity of water to mix the mixture and give it a desired consistency.

2. Mixture obtained by carrying out the method according to Claim 1.

3. Use of the mixture according to Claim 2 as mortar, particularly for injection of underground cavities.

## Patentansprüche

1. Verfahren zur Verwertung von Hausmüllverbrennungsrückständen und von Aschen aus der Verbrennung von Abwasserkläranlagenschlamm, dadurch gekennzeichnet, daß die Hausmüllverbrennungsrückstände vermischt werden mit:
- bezüglich der genannten Rückstände 5 bis 50 Gew.-% Asche aus der Verbrennung von Abwasserkläranlagenschlamm,
- bezüglich der genannten Rückstände 1 bis 20 Gew.-% Schlackenpulver,
- bezüglich der genannten Rückstände 0,3 bis 7 Gew.-% Magnesiumkalk, und
- einer Wassermenge, die ausreicht, um das Anrühren der Mischung durchzuführen und um dieser eine gewünschte Konsistenz zu verleihen.

2. Gemisch, das bei Durchführung des Verfahrens nach Anspruch 1 erhalten wird.

3. Verwendung des Gemisches nach Anspruch 2 als Mörtel, insbesondere zum Ausspritzen von unterirdischen Hohlräumen.
